(19) Europäisches Patentamt

European Patent Office

Office européen des brevets

(11) EP 0 910 216 A1

(12) EUROPEAN PATENT APPLICATION

(43) Date of publication:
21.04.1999 Bulletin 1999/16

(51) Int Cl.⁶: H04N 7/16, H04N 7/167

(21) Application number: 98402443.0

(22) Date of filing: 05.10.1998

| | |
|---|---|
| (84) Designated Contracting States:<br>AT BE CH CY DE DK ES FI FR GB GR IE IT LI LU MC NL PT SE<br>Designated Extension States:<br>AL LT LV MK RO SI | (72) Inventors:<br>• Fischer, Jean-Bernard, Thomson multimedia<br>  92100 Boulogne Billancourt (FR)<br>• Campinos, Arnaldo, Thomson multimedia<br>  92100 Boulogne Billancourt (FR) |
| (30) Priority: 17.10.1997 FR 9713022 | (74) Representative: Ruellan-Lemonnier, Brigitte et al<br>THOMSON multimedia,<br>Licensing and Intellectual Property,<br>46 Quai Alphonse Le Gallo<br>92100 Boulogne Billancourt (FR) |
| (71) Applicant: THOMSON multimedia<br>92100 Boulogne Billancourt (FR) | |

(54) **Process for transferring a scrambling key**

(57) The present invention relates to a process for transferring a scrambling key from a security element to a decoder.

The transfer process comprises a pledging phase, a challenge phase and an opening phase.

During the pledging phase, the security element which contains the decrypted scrambling key exchanges messages with the decoder so that, at the end of the pledging phase, the decoder possesses an item consisting of data representing, in a one-to-one manner, all or part of the decrypted scrambling key and of data making it possible to authenticate the smart card.

During the challenge phase, data are transmitted from the decoder to the smart card so as to designate which of the pledged data are to be disclosed. Preferably, the designating of the pledged data which are to be disclosed is performed randomly.

During the opening phase, the smart card transmits to the decoder The data which are to be disclosed, that is to say all or part of the decrypted scrambling key, as well as data making it possible to authenticate the smart card.

The invention applies to conditional access systems.

## Description

The present invention relates to a process for transferring a scrambling key and, more particularly, to a process for transferring a scrambling key between a security element and a decoder of a conditional access system.

A conditional access system allows a service provider to supply services only to those users who have acquired entitlements to these services. Such is the case, for example, for pay television systems.

As is known to those skilled in the art, the service supplied by a service provider consists of an item scrambled by scrambling keys. The scrambled item can only be descrambled, and hence read by the user, at the level of the entitlements allocated to this user. The scrambled item will hereafter be denoted IE(ECG) where ECG represents the unscrambled item (the abbreviation ECG standing for "Electronically Coded Goods").

In order to descramble the item, the service provider supplies each user with the scrambling keys which served for scrambling the item. To keep the scrambling keys secret, they are supplied after having been encrypted with an algorithm with key K. The various encrypted scrambling keys are forwarded to the various users in control messages which will, hereafter, be denoted ECM (the abbreviation ECM standing for "Entitlement Control Message").

In order to grant access to his service only to authorized users alone, the service provider supplies a smart card and a decoder to each of the users.

The ECMs are received by the decoder which transmits them to the smart card. The smart card contains the key K of the encryption algorithm for the scrambling keys. The scrambling keys are then decrypted by the smart card and restored, unenciphered, to the decoder which is then able to descramble the scrambled item which it receives.

A hacker who is monitoring the interface between the smart card and the decoder is then in a position to intercept the decrypted scrambling keys which travel from the smart card to the decoder.

This represents a drawback.

This drawback is all the more considerable since a conditional access system is a system of the stand-alone type in which the scrambled item IE(ECG) and the ECMs are contained on stand-alone information carriers such as, for example, digital video discs. This is because, a hacker who intercepts the unenciphered scrambling keys can store these keys and redistribute them, illicitly, to unauthorized users. The scrambled item contained on the stand-alone information carriers is then no longer protected.

In the case in which the conditional access system is of the "on-line" type, the scrambled item IE(ECG) is an item consisting of a signal distributed simultaneously, over the air or by cable, to the various customers of the service provider from a single source.

The decrypted scrambling keys then have to be hacked in real time. The hacking conditions are then made more difficult. However, the risk of hacking remains relatively high on sufficiently short links.

The invention does not have these drawbacks.

Thus, the invention relates to a process for transferring a decrypted scrambling key from a security element to a decoder. The transfer process comprises:

- a phase of pledging, in the decoder, of n first data output by the security element, n being an integer greater than or equal to 2, each of the n first pledged data consisting of all or part of the decrypted scrambling key and of a first datum allowing authentication of the security element,
- a phase of challenge during which a datum, making it possible to select p data from among n second data, is transferred, from the decoder to the security element, p being an integer less than n, each of the n second data consisting of all or part of the decrypted scrambling key and of a second datum allowing authentication of the security element,
- a phase of opening consisting of the transferring, from the security element to the decoder, of the p data selected during the challenge phase,
- a phase of calculation making it possible to extract all or part of the decrypted scrambling key from p data selected from among the n first pledged data and from the p data transferred during the opening phase.

According to a particular embodiment of the invention, the process for transferring a decrypted scrambling key is such that:

- each of the n first pledged data is the result of a first "exclusive or" function to which are applied a first datum and a second datum, the first datum being a pseudo-random word arising from the application of a seed to a first pseudo-random generator and the second datum being a word arising from the associating of a third datum and of all or part of the decrypted scrambling key,
- the opening phase consists in transferring, from the security element to the decoder, the seed and the second datum,
- the calculation phase consists:
- in calculating a fourth datum by applying the seed to a second pseudo-random generator;
- in applying the fourth datum and the pledged datum to a second "exclusive or" function so as to calculate a fifth datum;
- in comparing the fifth datum with the second datum transferred during the opening operation;
- in storing all or part of the decrypted scrambling key if the result of the comparison leads to the finding that the fifth datum is identical to the second datum transferred during the opening operation.

An advantage of the invention is that it protects the exchanging of data between the security element and the decoder.

Other characteristics and advantages of the invention will emerge on reading a preferred embodiment given with reference to the appended figures, in which:

- Figure 1 represents a basic diagram of the process for transferring a decrypted scrambling key between a security element and a decoder according to the invention,
- Figure 2 represents a particular embodiment of certain steps of the process represented in Figure 1.

In all the figures, the same references denote the same elements.

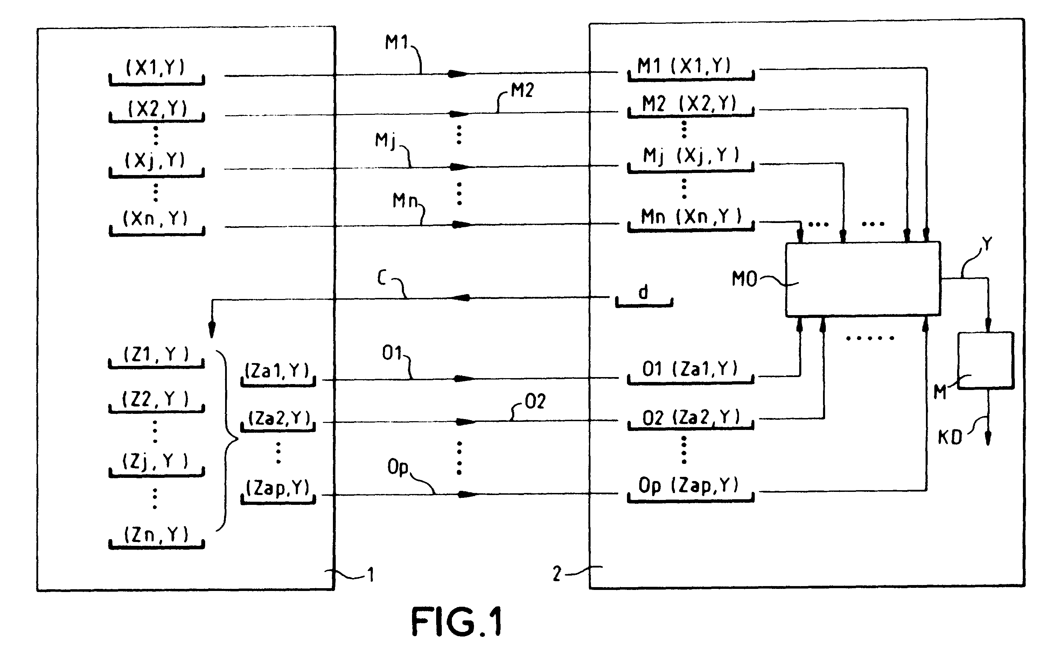

Figure 1 represents a basic diagram of the process for transferring a decrypted scrambling key between a security element 1 and a decoder 2. The security element is preferably a smart card.

As mentioned earlier, the scrambling key is transferred from the smart card 1 to the decoder 2 according to the principle of pledging.

The principle of pledging a datum, consists, in respect of a first party, in making a pledge to a second party with regard to a predetermined datum without forwarding this datum unenciphered. During a subsequent step, the first party reveals the unenciphered datum to the second party, the latter having the possibility of verifying that the unenciphered datum corresponds to the datum which was pledged.

According to the invention, the first party is the smart card 1, the second party is the decoder 2 and the datum to be pledged comprises all or part of the decrypted scrambling key.

The protocol for exchanging data between the smart card and the decoder runs essentially in three phases: a pledging phase, a challenge phase and an opening phase.

During the pledging phase, the smart card 1 which contains the decrypted scrambling key exchanges messages with the decoder 2 in such a way that, at the end of the pledging phase, the decoder possesses an item consisting of data representing, in a one-to-one manner, all or part of the decrypted scrambling key and of data making it possible to authenticate the smart card. The term "data making it possible to authenticate the smart card" should be understood to mean data making it possible to verify that the smart card has not been hacked.

Advantageously, the information contained in the decoder at the end of the pledging phase does not, by itself, make it possible to retrieve all or part of the decrypted scrambling key as well as the data for authenticating the card.

During the challenge phase, data are transmitted from the decoder to the smart card so as to designate which of the data pledged are to be disclosed. Preferably, the designating of the pledged data which are to be disclosed is performed in a random manner.

During the opening phase, the smart card transmits to the decoder the data which are to be disclosed, that is to say all or part of the decrypted scrambling key, as well as data for authenticating the smart card.

The smart card 1 comprises a set of data (X1, Y), (X2, Y), ..., (Xn, Y).

Each datum (Xj, Y) (j=1, 2, ..., n) consists of a datum Y and a datum Xj. The datum Y is all or part of the decrypted scrambling key. The datum Xj is a datum independent of the scrambling key and allowing authentication of the smart card.

The arrows M1, M2, ..., Mj, ..., Mn, C, O1, O2, ..., Op represent the various exchanges of data between the smart card 1 and the decoder 2.

The arrows M1, M2, ..., Mj, ..., Mn represent the pledging of the respective data (X1, Y), (X2, Y), ..., (Xj, Y), ..., (Xn, Y) . Preferably, the pledging Mj+1 of the datum (Xj+1, Y) follows the pledging Mj of the datum (Xj, Y).

According to the preferred embodiment of the invention, the pledging phase consists of 3 steps M1, M2 and M3. More generally, the pledging phase consists of n steps, n being an integer greater than or equal to 2.

The datum (Xj, Y) pledged in the decoder 2 is denoted Mj(Xj, Y). Advantageously, as mentioned earlier, the datum Mj(Xj, Y) does not, by itself, allow the data Xj and Y to be identified.

The arrow C represents the challenge phase. During the challenge phase, a datum d, preferably selected in a random manner, is transferred from the decoder 2 to the smart card 1. Under the action of the datum d, the microprocessor of the smart card 1 selects p data from among n data (Z1, Y), (Z2, Y), ..., (Zj, Y), ..., (Zn, Y) contained in the smart card and transfers the p data thus selected from the smart card 1 to the decoder 2.

Each datum (Zj, Y) (j=1, 2, ..., n) consists of the datum Y and of a datum Zj.

According to a first embodiment of the invention, the datum Zj (j=1, 2, ..., n) is identical to the datum Xj and the datum (Zj, Y) is identical to the datum (Xj, Y).

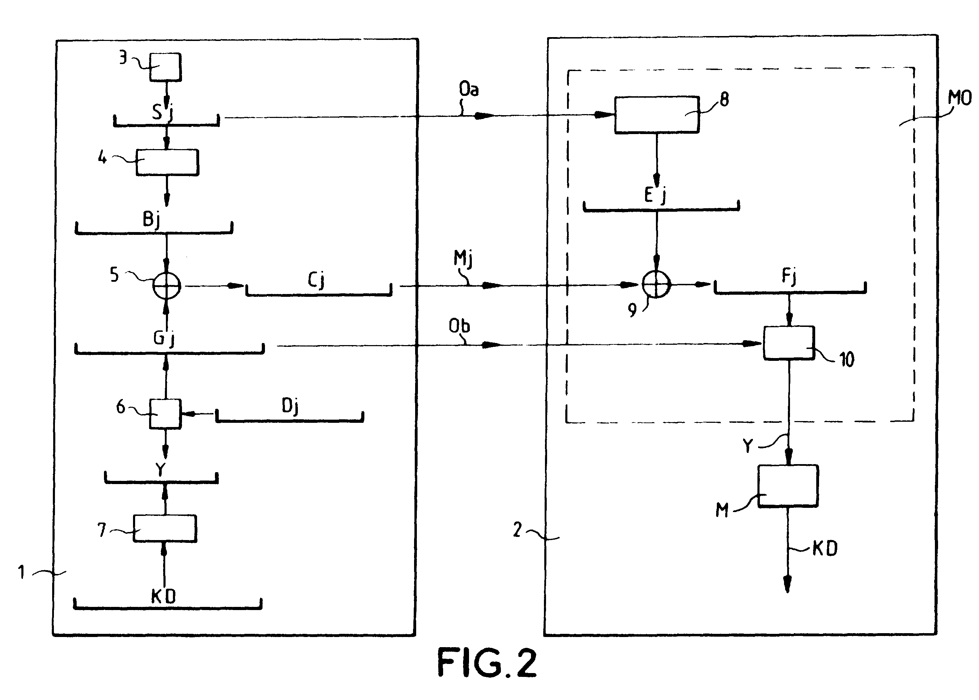

According to other embodiments of the invention, the datum Zj is different from the datum Xj. According to these other embodiments of the invention, the datum Zj is however correlated with the datum Xj. The expression correlation of the datum Zj and of the datum Xj should be understood to mean that the data (Zj, Y) and (Xj, Y) are such that, applied to various circuits and/or operators, they allow extraction of the datum Y and, simultaneously, authentication of the smart card. An example of such an embodiment is described in Figure 2.

The p data selected from among the n data (Z1, Y), (Z2, Y), ..., (Zj, Y), ..., (Zn, Y) constitute the set of data (Za1, Y), (Za2, Y), ..., (Zap, Y).

The transferring of the p data (Za1, Y), (Za2, Y), ..., (Zap, Y) from the smart card 1 to the decoder 2 corresponds to the opening operation, the arrows O1, O2, ..., Op representing the opening of the respective data (Za1, Y), (Za2, Y), ..., (Zap, Y).

The data stored in the decoder 2 after the opening of the respective data (Za1, Y), (Za2, Y), ..., (Zap, Y) are denoted O1(Za1, Y), O2(Za2, Y), ..., Op (Zap, Y).

Each of the p data Ok(Zak, Y) corresponds to one of the data Mj(Xj, Y) pledged. The expression datum Ok(Zak, Y) which corresponds to the datum Mj(Xj, Y) pledged, should be understood to mean either the datum Ok(Zak, Y) whose datum Zak is identical to the datum Xj in the case of the abovementioned first embodiment of the invention, or the datum Ok(Zak, Y) whose datum Zak is correlated with the datum Xj in the case of the other embodiments of the invention.

According to the invention, the decoder 2 comprises means MO making it possible to extract the datum Y from the datum Mj(Xj, Y) and from the datum Ok (Zak, Y) which corresponds to the datum Mj(Xj, Y) and, simultaneously, to authenticate the smart card 1. Once extracted by the means MO from the data Mj(Xj, Y) and Ok(Zak, Y), the datum Y is stored in a memory circuit M.

According to the preferred embodiment of the invention, the pledging phase relates to 3 data (X1, Y), (X2, Y), (X3, Y) and the opening phase to 2 data (Zal, Y), (Za2, Y).

As mentioned earlier, the datum Y is all or part of the decrypted scrambling key. In the case in which the datum Y is part of the decrypted scrambling key, the pledging operation described above is performed for each of the various parts which constitute the scrambling key. By way of example, each datum Y which is part of the decrypted scrambling key then consists of 7 or 8 bits and the scrambling key is reconstructed completely in about ten passes, each pass allowing the extraction, by the circuit MO, of a datum Y. The complete reconstruction of the decrypted scrambling key KD is then performed with the aid of the memory circuit M.

Advantageously, according to the invention, the transferring of the datum Y from the smart card 1 to the decoder 2 is accompanied, simultaneously, by authentication of the smart card 1.

Thus, a hacker who intercepts the data exchanged between the smart card and the decoder finds no benefit in modifying these data since, then, the smart card is no longer authenticated and, consequently, the datum transmitted to the decoder cannot be taken into account.

Figure 2 represents a particular embodiment of the basic diagram represented in Figure 1. In Figure 2, only the pledging and opening operations have been represented.

The various arrows linking the smart card 1 to the decoder 2 represent various types of exchanges of data between the smart card 1 and the decoder 2.

The arrow Mj represents the pledging, in the decoder 2, of a datum Cj contained in the smart card 1.

The arrows Oa and Ob represent the opening step corresponding to the pledging step Mj.

For reasons of convenience, the exchanging of data between the smart card 1 and the decoder 2 represented in Figure 2 relates to a single pledging step and a single opening step. In fact, as mentioned earlier, according to the preferred embodiment of the invention, 3 data are pledged in the decoder 2 and 2 opening steps (Oa, Ob) are performed from the smart card 1 to the decoder 2.

According to the particular embodiment of Figure 2, the smart card 1 comprises a generator of random words 3, a pseudo-random generator 4, an "exclusive or" function 5, a data association circuit 6 such as, for example, a data concatenation circuit, a splitting operator 7 and the decoder 2 comprises a pseudo-random generator 8, an "exclusive or" function 9, a comparison circuit 10 and the circuit M allowing storage of the various data Y and, if necessary, reconstruction of a complete key KD from the various data Y.

The pseudo-random generator 8, the "exclusive or" function 9 and the comparison circuit 10 constitute an example of a circuit MO.

The pledged datum Cj arises from applying the data Bj and Gj to the "exclusive or" function 5. Thus, we may write:

$$Cj = Bj \oplus Gj.$$

The datum Bj is a pseudo-random word arising from the generator 4 to which the seed Sj is applied, the seed Sj itself arising from the generator of random words 3.

The datum Gj consists of a word arising from the associating of a datum Dj and the datum Y. The associating of the datum Dj and of the datum Y can be performed, for example, by concatenation.

According to the preferred embodiment of the invention, the datum Y is part of the decrypted scrambling key KD consisting of b bits. By way of example, b is equal to 7 or 8 for a decrypted scrambling key comprising 70 or 80 bits respectively. The datum Y then arises from the splitting operator 7 to which the decrypted scrambling key KD is applied. As is known to the person skilled in the art, the encrypted scrambling key is transmitted from the decoder 2 to the smart card 1 and the smart card 1 contains a decryption circuit (not represented in Figure 2) making it possible to restore the decrypted key KD.

According to another embodiment of the invention, the datum Y is the entire decrypted scrambling key.

According to the invention, the authentication procedure is activated each time an encrypted scrambling key is transmitted from the decoder 2 to the smart card 1.

The datum Cj is a one-to-one encrypted representation of the datum Gj which remains secret inside Cj since it is not possible to determine the datum Bj arising from the pseudo-random generator 4.

Having transferred the word Cj from the smart card 1 to the decoder 2, the phase of pledging Cj is then completed.

The opening step is then implemented. During the opening step, the two data Sj and Gj are transferred from the smart card 1 to the decoder 2. The datum Sj is transferred by the opening Oa and the datum Gj by the opening Ob.

The seed Sj transferred is applied to the pseudo-random generator 8. Under the action of the seed Sj, the pseudo-random generator 8 generates a datum Ej. The pledged data Ej and Cj are then applied to the "exclusive or" function 9. The datum Fj arising from the "exclusive or" function 9 is compared with the datum Gj by the comparison circuit 10.

If the datum Ej is identical to the datum Bj, then the datum Fj is identical to the datum Gj.

Thus: $Fj = Ej \oplus Cj$

i.e. $Fj = Ej \oplus Bj \oplus Gj$

hence, if $Ej = Bj$, it follows that:

$Fj = Bj \oplus Bj \oplus Gj$, i.e. $Fj = Gj$.

Thus, the comparison operation 10 leads to the verifying of whether the datum Fj is or is not identical to the datum Gj. If such is the case, the datum Y is stored in the memory M.

Advantageously, the transferring of the scrambling keys from the smart card 1 to the decoder 2 with the aid of an authentication protocol such as the one described in Figures 1 and 2 ensures, on the one hand, that the smart card is an authentic card and not a hacked card, and, on the other hand, that the scrambling key transmitted to the decoder 2 actually originates from a non-hacked smart card.

## Claims

1. Process for transferring a decrypted scrambling key from a security element (1) to a decoder (2), characterized in that it comprises:

   - a phase of pledging (M1, M2, ..., Mj, ..., Mn), in the decoder (2), of n first data ((X1, Y), (X2, Y), ..., (Xj, Y), ..., (Xn, Y)) output by the security element (1), n being an integer greater than or equal to 2, each of the n first pledged data consisting of all or part (Y) of the decrypted scrambling key (KD) and of a first datum (Xj) allowing authentication of the security element (1),

   - a phase of challenge (C) during which a datum (d) making it possible to select p data ((Za1, Y), (Za2, Y), ..., (Zap, Y)) from among n second data ((Z1, Y), (Z2, Y), ..., (Zj, Y), ..., (Zn, Y)) is transferred, from the decoder (2) to the security element (1), p being an integer less than n, each of the n second data consisting of all or part (Y) of the decrypted scrambling key and of a second datum (Zj) allowing authentication of the security element (1),

   - a phase of opening (O1, O2, ..., Op) consisting of the transferring, from the security element (1) to the decoder (2), of the p data selected during the challenge phase (C),

   - a phase of calculation making it possible to extract all or part (Y) of the decrypted scrambling key from p data selected from among the n first pledged data ((X1, Y), (X2, Y), ..., (Xj, Y), ..., (Xn, Y)) and from the p data (O1(Za1, Y), O2(Za2, Y), ..., Op(Zap, Y)) transferred during the opening phase.

2. Process according to Claim 1, characterized in that it comprises, after the calculation phase, a phase of reconstructing the complete scrambling key (KD) in the case in which the phases of pledging, opening and calculation relate to a part (Y) of the complete scrambling key (KD).

3. Process according to either one of Claims 1 and 2, characterized in that the pledging phase (M1, M2, ..., Mj, ..., Mn) is composed of 3 pledging steps (M1, M2, M3) and in that the opening step (O1, O2, ..., Op) is composed of 2 opening steps.

4. Process according to any one of Claims 1 to 3, characterized in that the selecting of the p data ((Za1, Y), (Za2, Y), ..., (Zap, Y)) from among the n second data ((Z1, Y), (Z2, Y), ..., (Zj, Y), ..., (Zn, Y)) is performed randomly.

5. Process according to any one of Claims 1 to 4, characterized:

   - in that each (Cj) of the n first pledged data is the result of a first "exclusive or" function (5) to which are applied a first datum (Bj) and a second datum (Gj), the first datum (Bj) being a pseudo-random word arising from the application of a seed (Sj) to a first pseudo-random generator (4) and the second datum (Gj) being a word arising from the associating of a third datum (Dj) and of all or part of the decrypted scrambling key (Y),

   - in that the opening phase consists in transferring, from the security element (1) to the decoder (2), the seed (Sj) and the second datum (Gj), and

   - in that the calculation phase consists:

   - in calculating a fourth datum (Ej) by applying the seed Sj to a second pseudo-random generator (8);

- in applying the fourth datum (Ej) and the pledged datum (Cj) to a second "exclusive or" function (9) so as to calculate a fifth datum (Fj);
- in comparing the fifth datum (Fj) with the second datum (Gj) transferred during the opening operation;
- in storing all or part (Y) of the decrypted scrambling key if the result of the comparison leads to the finding that the fifth datum (Fj) is identical to the second datum (Gj) transferred during the opening operation.

FIG.1

FIG.2

**European Patent Office**

## EUROPEAN SEARCH REPORT

Application Number

EP 98 40 2443

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 97 38530 A (DIGCO B V ;RIX SIMON PAUL ASHLEY (ZA); GLASSPOOL ANDREW (GB); DAVI) 16 October 1997 <br> * page 3, line 25 - page 5, line 10 * <br> * figures 1,2 * <br> --- | 1-5 | H04N7/16 <br> H04N7/167 |
| A | EP 0 585 833 A (NOKIA TECHNOLOGY GMBH) 9 March 1994 <br> * page 2, column 2, line 46 - page 3, column 4, line 15 * <br> * figure 1 * <br> ----- | 1-3,5 | |
| | | | TECHNICAL FIELDS SEARCHED (Int.Cl.6) <br><br> H04N |

The present search report has been drawn up for all claims

| Place of search | Date of completion of the search | Examiner |
|---|---|---|
| THE HAGUE | 23 November 1998 | Van der Zaal, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)